# EUROPÄISCHE PATENTSCHRIFT

(11) **EP 1 834 405 B1**
(45) Veröffentlichungstag und Bekanntmachung des Hinweises auf die Patenterteilung: **29.03.2017**
(21) Anmeldenummer: 06704626.8
(22) Anmeldetag: 04.01.2006
(51) Int. Cl.: H02P 25/08

(54) **VERFAHREN ZUR REGELUNG DER BESTROMUNG EINER SPULE EINES RELUKTANZMOTORS SOWIE ELEKTRISCHE SCHALTUNGSORDNUNG HIERZU**
METHOD FOR REGULATING THE CURRENT SUPPLY OF A COIL OF A RELUCTANCE MOTOR AND ELECTRIC CIRCUIT ARRANGEMENT FOR SAID METHOD
PROCEDE DE REGLAGE DU PASSAGE DU COURANT DANS UNE BOBINE D'UN MOTEUR A RELUCTANCE ET CIRCUIT ELECTRIQUE ASSOCIE

(30) Priorität: 07.01.2005 DE 102005001033
(43) Veröffentlichungstag der Anmeldung: 19.09.2007
(73) Patentinhaber: Vorwerk & Co. Interholding GmbH, 42275 Wuppertal (DE)
(72) Erfinder: LANG, Torsten, 42657 Solingen (DE); FIESELER, Martin, 45134 Essen (DE)
(74) Vertreter: Müller, Enno
(86) Internationale Anmeldenummer: PCT/EP2006/050039
(87) Internationale Veröffentlichungsnummer: WO 2006/072614

(56) Entgegenhaltungen:
- EP-A- 0 397 514
- GB-A- 2 314 703
- US-A- 5 166 591
- US-A- 5 850 133
- US-B1- 6 198 239

## Beschreibung

Die Erfindung betrifft zunächst ein Verfahren zur Regelung der Bestromung einer Spule eines Reluktanzmotors.

Verfahren der in Rede stehenden Art sind bekannt. So ist beispielsweise aus der DE 102 29 443 A1 ein Verfahren zur Steuerung eines Reluktanzmotors bekannt, bei welchem zu einem Zeitpunkt, in dem eine erste Spule noch erregt ist, eine zweite, in Drehrichtung des Rotors folgende Spule zusätzlich erregt wird. Zufolge dieses Verfahrens wird ein gleichmäßiger Lauf des Rotors auch bei geringen Drehzahlen.

Aus der US 6,198,239 B1 ist ein Verfahren zur Bestromung einer Spule eines Reluktanzmotors bekannt, bei welchem die Bestromung über einen vorgegebenen Zeitraum zwischen einem oberen und unteren Spannungswert aufrechterhalten wird. Die Entstromung erfolgt bis auf Null und zeitgesteuert wird eine weitere Bestromung vorgenommen. Gleiches ist auch aus der US 5,166,591 A und der GB 2 314 703 A bekannt.

Ausgehend von dem vorgenannten Stand der Technik beschäftigt sich die Erfindung mit der Aufgabenstellung, ein Verfahren zur Regelung der Bestromung einer Spule eines Reluktanzmotors anzugeben, mittels welchem eine möglichst maximale Leistungsumsetzung erreichbar ist.

Diese Aufgabe ist beim Gegenstand des Anspruches 1 gelöst, wobei darauf abgestellt ist, dass die Bestromung vorgenommen wird in Abhängigkeit des Verlaufs der Entstromung derselben Spule, nämlich nach Unterschreiten eines die Entstromung charakterisierenden, vorgegebenen Grenzwertes, wobei weiter nach einem Unterschreiten des Grenzwertes die Bestromung derselben Spule unmittelbar erfolgt.

Beim Gleichstrommotor mit mindestens einer Feldwicklung, die während der Bestromungsphase einen elektrischen Fluss aufbaut, muss die aufgebaute magnetische Energie während einer Entstromungsphase wieder vollständig abgebaut werden. Diese Zeit hängt u.a. von verschiedenen Faktoren ab, wie z.B. der Temperatur oder auch Exemplarstreuungen der Bauteile. Um die Entstromung sicherzustellen, ist es bekannt, für die Entstromung den "worst case" anzunehmen. Durch die Annahme der "worst case"-Entstromungszeit wird nicht die optimale Leistung abgerufen; entsprechend wird die maximal mögliche Leistungsdichte reduziert. Durch das erfindungsgemäße Verfahren wird eine Optimierung der maximalen Leistungsdichte eines Reluktanzmotors erreicht. Die Bestromung der Spule wird erfindungsgemäß unmittelbar nach Unterschreiten eines vorgegebenen Entstromungs-Grenzwertes vorgenommen. Entsprechend erfolgt die Bestromung nicht in Abhängigkeit von einer Annahme, sondern vielmehr in Abhängigkeit vom realen Entstromungszustand der Spule. Entsprechend finden auch die Entstromungsphase beeinflussende Parameter, wie z.B. die Temperatur oder auch die Exemplarstreuung der Bauteile in vorgeschlagener Erfindung Berücksichtigung. Mit der vorliegenden Erfindung ist für einen Reluktanzmotor bei allen Umgebungsbedingungen und Exemplarstreuungen die maximal mögliche Leistung umsetzbar.

Weiter wird vorgeschlagen, dass der bei der Entstromung gegebene Strom (Freilaufstrom) gemessen wird und mit dem Grenzwert verglichen wird. Entsprechend wird über die gesamte Entstromungsphase bis zum Unterschreiten des vorgegebenen Grenzwertes der Freilaufstrom gemessen. Dieser läuft in einer bevorzugten Ausgestaltung über Dioden, wobei zur Messung ein Shunt-Widerstand zwischengeschaltet ist. Neben der Messfunktion dient dieser Shunt-Widerstand auch zur beschleunigten Entstromung der Spule. In vorteilhafter Weise ist vorgesehen, dass ein zum Freilaufstrom proportionaler Spannungsabfall geglättet wird und mittels eines Komparators zum Vergleich des Freilaufstroms mit dem Grenzwert herangezogen wird. Dieser Komparator gibt bevorzugt ein Signal an einen Mikrokontroller ab, sobald der Grenzwert unterschritten ist und somit die Entstromung abgeschlossen ist. Der Mikrokontroller kann hiernach unmittelbar mit der nächsten Bestromung derselben Spule beginnen, ohne dass es hierbei zu einer Totzeit kommt. Die Glättung des Spannungsabfalls erfolgt weiter bevorzugt über einen Tiefpass. Auch ist vorgesehen, dass der Ausgang des Tiefpasses über ein Widerstands-Netzwerk dem Komparator zugeführt wird.

Die Erfindung betrifft des Weiteren eine elektrische Schaltungsanordnung zur Be- und Entstromung einer Spule eines Reluktanzmotors.

Eine derartige Schaltungsanordnung ist aus der eingangs erwähnten DE 102 29 443 A1 bekannt. Weiter wird darüber hinaus auf den eingangs genannten Stand der Technik verwiesen.

Um eine Schaltungsanordnung der in Rede stehenden Art anzugeben, welche bei möglichst einfachem Aufbau eine möglichst maximale Leistungsumsetzung des Reluktanzmotors erbringt, wird vorgeschlagen, dass der bei Entstromung fließende Strom (Freilaufstrom) mittels eines Komparators mit einem vorgegebenen Grenzwert verglichen wird und dass bei Unterschreiten des Grenzwertes ein Signal abgegeben wird, das ein Ende der Entstromung anzeigt und die unmittelbare Bestromung derselben Spule veranlasst.

Es ist eine Optimierung der maximalen Leistungsdichte eines Reluktanzmotors erreicht. Unabhängig von den Umgebungsbedingungen, wie beispielsweise die Temperatur und unabhängig von Exemplarstreuungen ist eine maximal mögliche Leistungsumsetzung des Reluktanzmotors erreichbar. Hierzu wird die Entstromungsphase überwacht. Bei Unterschreiten eines vorgegebenen Grenzwertes wird ein Signal erzeugt, zum Start der Bestromungsphase derselben Spule. Entgegen den Schaltungsanordnungen, wie sie bei auf dem Markt üblichen Reluktanzmotoren Verwendung finden, liegen bei der erfindungsgemäßen Schaltungsanordnung keine Leistungslücken und Totzeiten zwischen der Entstromungsphase und der Bestromungsphase vor. Das bei Unterschreiten des Grenzwertes generierte Signal kann an einen Mikrokontroller weitergeleitet sein, der hiernach unmittelbar die nächste Bestromungsphase derselben Spule einleitet.

Es erweist sich von Vorteil, dass im Falle der Entstromung von dem Freilaufstrom Dioden (Freilaufdioden) durchsetzt werden und dass zur Messung des Freilaufstroms ein Widerstand zwischengeschaltet ist. Dieser Widerstand ist weiter bevorzugt ein Shunt-Widerstand, der neben der Messaufgabe auch weiter zur Beschleunigung der Entstromungsphase dient. Der zum Freilaufstrom proportionale Spannungsabfall an dem Shunt-Widerstand wird dem Komparator zugeführt, zum Vergleich des Freilaufstroms mit dem vorgegebenen Grenzwert. Hierbei wird der Spannungsabfall zuvor über einen Tiefpass (RC-Tiefpass) geglättet. Diesbezüglich wird schließlich vorgeschlagen, dass der Spannungsabfall über ein Widerstands-Netzwerk dem Komparator zugeführt wird.

Nachstehend ist die Erfindung anhand der beigefügten Zeichnung, welche lediglich ein Ausführungsbeispiel darstellt, näher erläutert. Es zeigt:
- Fig.1: eine schematische Ansicht eines Reluktanzmotors mit Blick auf den Rotor und Statorspulen;
- Fig. 2: ein Funktionsschaltbild einer erfindungsgemäßen Schaltungsanordnung zur Be- und Entstromung einer Spule des Reluktanzmotors.

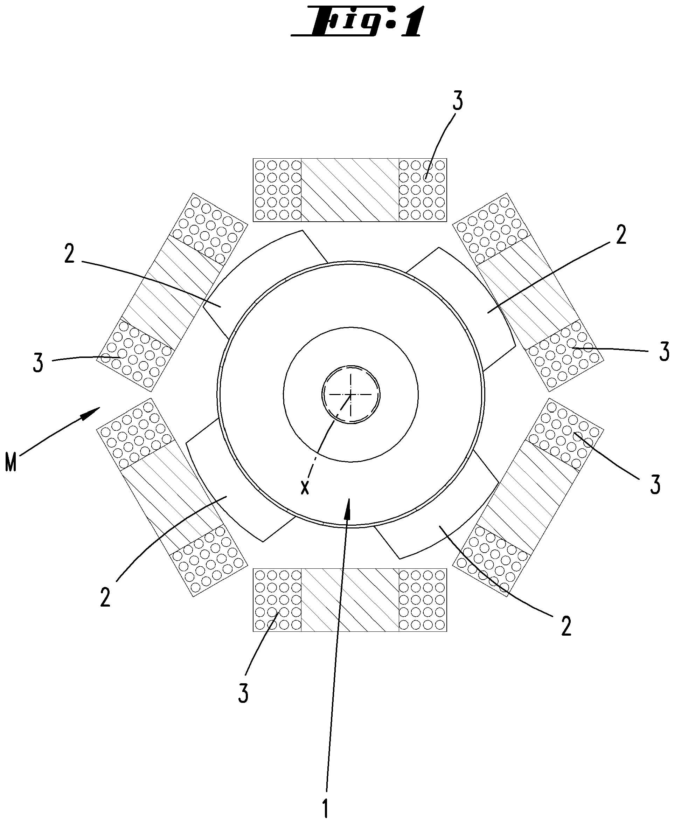

Dargestellt und beschrieben ist zunächst mit Bezug zu Fig.1 ein Rotor 1 mit vier winkelgleichmäßig um eine Rotorachse x angeordneten Rotorsegmenten 2, zur Zuordnung in einem 4/6-Reluktanzmotor M.

Der vierpolige Rotor 1 ist zugeordnet einem schematisch dargestellten Stator mit sechs winkelgleichmäßig um die Rotationsachse x des Rotors 1 angeordneten Spulen 3.

Um den Rotor 1 in Rotation zu versetzen, werden die Spulen 3 zu sich diametral gegenüberliegenden Paaren bestromt, zum Aufbau eines elektrischen Flusses. Die magnetische Energie muss hiernach im Zuge einer Entstromungsphase wieder vollständig abgebaut werden.

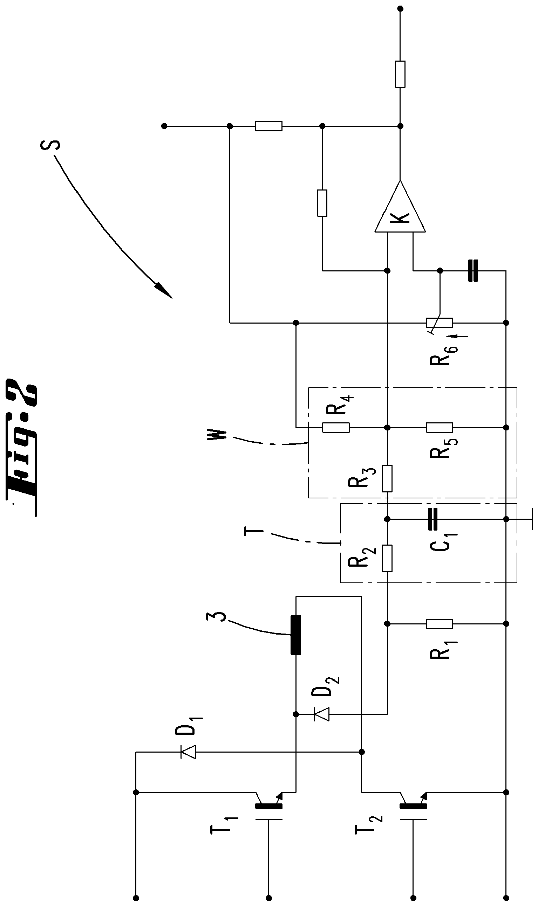

Zur Be- und Entstromung jeder Spule 3 ist jeweils eine wie in Fig. 2 dargestellte elektrische Schaltungsanordnung S vorgesehen. Diese ist wie folgt aufgebaut:
Es sind zunächst zwei Transistoren T₁ und T₂ in Art von Insulated Gate BipolarTransistoren (IGBT) vorgesehen, die ihr Schaltsignal über ihre Basen von einem nicht dargestellten Mikrokontroller erhalten.

Der Kollektor des Transistors T₁ ist an die Zwischenkreisspannung angeschlossen. Zwischen dem Kollektor des Transistors T₂ und dem Emitter des Transistors T₁ ist die zu bestromende bzw. zu entstromende Spule 3 geschaltet.

Ein über den Mikrokontroller auf die Basen der Transistoren T₁ und T₂ gegebenes Schaltsignal führt zur Bestromung der Spule 3. Die Entstromung erfolgt nach dem Ausschalten der Transistoren T₁ und T₂. Diese Entstromung der Spule 3 erfolgt über Freilaufdioden D₁ und D₂ sowie über den Widerstand R₁. Der Widerstand R₁ ist hierbei ein Shunt-Widerstand, mittels welchem der Freilaufstrom gemessen wird. Darüber hinaus wird über den Shunt-Widerstand R₁ eine beschleunigte Entstromung der Spule 3 erreicht.

Der zum Freilaufstrom proportionale Spannungsabfall wird über einen Tiefpass T, bestehend aus einem Widerstand R₂ und einem Kondensator C₁, geglättet und hiernach über ein Widerstands-Netzwerk W, bestehend aus den Widerständen R₃, R₄ und R₅ einem Komparator K zugeführt.

Dieser Komparator K vergleicht den ermittelten Freilaufstrom mit einem minimalen Grenzwert und gibt ein Signal an den Mikrokontroller, wenn dieser Grenzwert unterschritten wird und somit die Entstromung abgeschlossen ist. Der Mikrokontroller kann hiernach unmittelbar die nächste Bestromung über die Transistoren T₁ und T₂ einleiten, ohne dass es zu einer Totzeit kommt.

Der Vergleichs-Grenzwert ist über den Regelwiderstand R₆ voreinstellbar.

## Patentansprüche

1. Verfahren zur Regelung der Bestromung einer Spule (3) eines Reluktanzmotors (M), mit einer Be- und Entstromung der Spule, wobei im Falle der Entstromung eine magnetische Energie im Zuge einer Entstromungsphase wieder vollständig abgebaut wird, **dadurch gekennzeichnet, dass** die Bestromung in Abhängigkeit des Verlaufes der Entstromung derselben Spule (3) vorgenommen wird, nämlich nach Unterschreiten eines die Entstromung charakterisierenden, vorgegebenen Grenzwertes, wobei weiter unmittelbar nach einem Unterschreiten des Grenzwertes die Bestromung derselben Spule (3) erfolgt.

2. Verfahren nach Anspruch 1, **dadurch gekennzeichnet, dass** der bei der Entstromung gegebene Strom gemessen wird und mit dem Grenzwert verglichen wird.

3. Verfahren nach einem der vorhergehenden Ansprüche, **dadurch gekennzeichnet, dass** der Freilaufstrom über Dioden (D₁, D₂) läuft und dass zur Messung ein Shunt-Widerstand (R₁) zwischengeschaltet ist.

4. Verfahren nach einem der vorhergehenden Ansprüche, **dadurch gekennzeichnet, dass** ein zum Freilauf proportionaler Spannungsabfall geglättet wird und mittels eines Komparators (K) zum Vergleich des Freilaufstroms mit dem Grenzwert herangezogen wird.

5. Verfahren nach Anspruch 4, **dadurch gekennzeichnet, dass** die Glättung des Spannungsabfalls über einen Tiefpass (T) erfolgt.

6. Verfahren nach einem der vorhergehenden Ansprüche, **dadurch gekennzeichnet, dass** der Ausgang des Tiefpasses (T) über ein Widerstands-Netzwerk (W) dem Komparator (K) zugeführt wird.

7. Elektrische Schaltungsanordnung (S) zur Be- und Entstromung einer Spule (3) eines Reluktanzmotors (M) mit einer Be- und Entstromung der Spule, wobei im Falle der Entstromung eine magnetische Energie im Zuge einer Entstromungsphase wieder vollständig abgebaut wird, **dadurch gekennzeichnet, dass** der bei Entstromung fließende Strom mittels eines Komparators (K) mit einem vorgegebenen Grenzwert verglichen wird und dass bei Unterschreiten des Grenzwertes ein Signal abgegeben wird, das ein Ende der Entstromung anzeigt und die unmittelbare Bestromung derselben Spule (3) veranlasst.

8. Schaltungsanordnung nach Anspruch 7, **dadurch gekennzeichnet, dass** im Falle der Entstromung von dem Freilaufstrom Dioden (Freilaufdioden D₁ und D₂) durchsetzt werden und dass zur Messung des Freilaufstromes ein Widerstand (R₁) zwischengeschaltet ist.

9. Schaltungsanordnung nach Anspruch 8, **dadurch gekennzeichnet, dass** der Widerstand (R₁) ein Shunt-Widerstand ist.

10. Schaltungsanordnung nach einem der Ansprüche 7 bis 9, **dadurch gekennzeichnet, dass** der zum Freilaufstrom proportionale Spannungsabfall dem Komparator (K) zugeführt wird.

11. Schaltungsanordnung nach Anspruch 10, **dadurch gekennzeichnet, dass** der Spannungsabfall über einen Tiefpass (T) geglättet wird.

12. Schaltungsanordnung nach einem der Ansprüche 10 oder 11, **dadurch gekennzeichnet, dass** der Spannungsabfall über ein Widerstands-Netzwerk (W) dem Komparator (K) zugeführt wird.

## Claims

1. Method for regulating the energisation of a coil (3) of a reluctance motor (M), comprising energising and de-energising the coil, magnetic energy being completely dissipated again during a de-energisation phase when the coil is de-energised, **characterised in that** the coil (3) is energised on the basis of the progression of the de-energisation of the same coil, i.e. after the energy falls below a predetermined threshold value characterising the de-energisation, said coil (3) further being energised immediately after the energy falls below the threshold value.

2. Method according to claim 1, **characterised in that** the current provided during de-energisation is measured and compared with the threshold value.

3. Method according to either of the preceding claims, **characterised in that** the freewheeling current flows via diodes (D₁, D₂) and **in that** a shunt resistor (R₁) is inserted for the measurement.

4. Method according to any of the preceding claims, **characterised in that** a voltage drop proportional to the freewheeling current is attenuated and is used by a comparator (K) to compare the freewheeling current with the threshold value.

5. Method according to claim 4, **characterised in that** the voltage drop is attenuated by means of a low-pass filter (T).

6. Method according to any of the preceding claims, **characterised in that** the output of the low-pass filter (T) is supplied to the comparator (K) via a resistor network (W).

7. Electrical circuit arrangement (S) for energising and de-energising a coil (3) of a reluctance motor (M) involving energising and de-energising the coil, magnetic energy being completely dissipated again during a de-energisation phase when the coil is de-energised, **characterised in that** the current flowing during de-energisation is compared with a predetermined threshold value by means of a comparator (K) and **in that** if the current falls below the threshold value, a signal is emitted that indicates an end to the de-energisation and prompts the immediate energisation of the same coil (3).

8. Circuit arrangement according to claim 7, **characterised in that** the freewheeling current flows through diodes (freewheeling diodes D₁ and D₂) during de-energisation and **in that** a resistor (R₁) is inserted in order to measure the freewheeling current.

9. Circuit arrangement according to claim 8, **characterised in that** the resistor (R₁) is a shunt resistor.

10. Circuit arrangement according to any of claims 7 to 9, **characterised in that** the voltage drop proportional to the freewheeling current is supplied to the comparator (K).

11. Circuit arrangement according to claim 10, **characterised in that** the voltage drop is attenuated by means of a low-pass filter (T).

12. Circuit arrangement according to either claim 10 or claim 11, **characterised in that** the voltage drop is supplied to the comparator (K) via a resistor network (W).

## Revendications

1. Procédé pour commander le courant d'alimentation d'une bobine d'un moteur à réluctance (M), comprenant une alimentation en courant et une décharge du courant de la bobine, dans lequel dans le cas de la décharge de courant, une énergie magnétique est à nouveau entièrement annihilée au cours d'une phase de décharge du courant, **caractérisé en ce que** l'alimentation en courant est réalisée en dépendance du déroulement de la décharge de courant de la même bobine (3), à savoir après le passage sous une valeur seuil prédéterminée caractérisant la décharge de courant, dans lequel en outre l'alimentation en courant de la même bobine (3) survient immédiatement après un passage sous la valeur seuil.

2. Procédé selon la revendication 1, **caractérisé en ce que** le courant fourni lors de la décharge de courant est mesuré et comparé à la valeur seuil.

3. Procédé selon l'une des revendications précédentes, **caractérisé en ce que** le courant de roue libre traverse des diodes (D₁, D₂) et qu'une résistance shunt (R₁) est interposée aux fins de mesure.

4. Procédé selon l'une des revendications précédentes, **caractérisé en ce qu'**une chute de tension proportionnelle au courant de roue libre est lissée et est utilisé pour comparer le courant de roue libre avec la valeur seuil au moyen d'un comparateur (K).

5. Procédé selon la revendication 4, **caractérisé en ce que** le lissage de la chute de tension est réalisé avec un filtre passe-bas (T).

6. Procédé selon l'une des revendications précédentes, **caractérisé en ce que** la sortie du filtre passe-bas (T) est fournie au comparateur (K) par le biais d'un réseau de résistances (W).

7. Circuit électrique (S) pour l'alimentation en courant et la décharge du courant d'une bobine (3) d'un moteur à réluctance (M) comprenant une alimentation en courant et une décharge du courant de la bobine, dans lequel, dans le cas de la décharge de courant, une énergie magnétique est à nouveau entièrement annihilée au cours d'une phase de décharge du courant, **caractérisé en ce que** le courant circulant lors de la décharge de courant est comparé à une valeur seuil prédéterminée au moyen d'un comparateur (K) et que lors du passage sous la valeur seuil, un signal est fourni lequel indique une fin de la décharge de courant et qui provoque immédiatement l'alimentation en courant de cette même bobine (3).

8. Circuit électrique selon la revendication 7, **caractérisé en ce que** dans le cas de la décharge de courant, des diodes (diodes de roue libre D₁ et D₂) sont traversées par le courant de roue libre et qu'une résistance (R1) est interposée pour mesurer le courant de roue libre.

9. Circuit électrique selon la revendication 8, **caractérisé en ce que** la résistance (R₁) est une résistance-shunt.

10. Circuit électrique selon l'une des revendications 7 à 9, **caractérisé en ce que** la chute de tension proportionnelle au courant de roue libre est fournie au comparateur (K).

11. Circuit électrique selon la revendication 10, **caractérisé en ce que** la chute de tension est lissée par un filtre passe-bas (T).

12. Circuit électrique selon l'une des revendications 10 ou 11, **caractérisé en ce que** la chute de tension est fournie au comparateur (K) par le biais d'un réseau de résistances (W).
